# EUROPÄISCHE PATENTANMELDUNG

(11) **EP 3 674 611 A1**
(43) Veröffentlichungstag der Anmeldung: **01.07.2020**
(21) Anmeldenummer: 19217877.0
(22) Anmeldetag: 19.12.2019
(51) Int. Cl.: F24D 3/14, F24D 13/02

(54) **FLÄCHENTEMPERIERUNGSSYSTEM**

(30) Priorität: 19.12.2018 DE 202018107262 U
(71) Anmelder: REHAU AG + Co, 95111 Rehau (DE)
(72) Erfinder: Vohler, Tobias, 92318 Neumarkt (DE); May, Dirk, 90427 Nürnberg (DE)

(57) **Zusammenfassung**

Die vorliegende Erfindung bezieht sich auf ein Flächentemperierungssystem (2), dass mindestens ein flexibles Heizelement (1), dessen Außenseite zumindest teilweise von einem ersten Element (6) einer Klettverbindung ummantelt ist; und ein Trägerelement (7), wobei an einer Seite des Trägerelements (7) ein zweites Element (10) der Klettverbindung angeordnet ist, so dass das/die flexible(n) Heizelement(e) (1) lösbar unter Bildung der Klettverbindung an dem Trägerelement (7) festlegbar sind; umfasst, wobei sich das Flächentemperierungssystem (2) erfindungsgemäß dadurch auszeichnet, dass das/die flexible(n) Heizelemente) als flexible(s) Heizkabel (1) ausgebildet ist/sind.

## Beschreibung

Die vorliegende Erfindung betrifft ein Flächentemperierungssystem, das mindestens ein flexibles Heizelement, dessen Außenseite zumindest teilweise von einem ersten Element einer Klettverbindung ummantelt ist; und ein Trägerelement, wobei an einer Seite des Trägerelements ein zweites Element der Klettverbindung angeordnet ist, so dass das/die flexible(n) Heizelement(e) lösbar unter Bildung der Klettverbindung an dem Trägerelement festlegbar ist/sind.

Derartige Flächentemperierungssysteme und darin einsetzbare flexible Heizelemente sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es beispielsweise aus der DE 20 2010 009 133 U1 bekannt, die Rohrleitungen mittels einer Klettverbindung auf den Trägern festzulegen. Nachteilig an derartigen Flächentemperierungssystemen auf Rohrleitungsbasis wird gesehen, dass in der warmen Jahreszeit heißes Wasser erzeugt und bevorratet werden muss, um das Flächentemperierungssystem zu betreiben.

Daneben sind im Stand der Technik, beispielsweise aus der DE 29 49 511 A1 und der DE 298 12 219 U1, elektrische Flächentemperierungssysteme bekannt, bei denen an einer Seite einer vorkonfektionierten Temperierungsmatte eine als Widerstandsheizleitung eingerichtete Temperiereinrichtung, beispielsweise mittels Klebeband, Clips oder Haltern, befestigt ist. Nachteilig an solchen elektrischen Flächentemperierungssystemen nach dem Stand der Technik wird gesehen, dass die vorkonfektionierten Temperierungsmatten eine vorgegebene Größe aufweisen und sich daher nur sehr schwer an individuelle Grundrisse des zu beheizenden Raums anpassen lassen.

Dementsprechend liegt der vorliegenden Erfindung die Aufgabe zugrunde, ein Flächentemperierungssystem zur Verfügung zu stellen, das mindestens einen der Nachteile des Stands der Technik überwindet. Insbesondere soll sich das erfindungsgemäße einfach und schnell auch in Räumen mit beliebigem Grundriss verlegen lassen.

Diese und andere Aufgaben werden durch ein Flächentemperierungssystem mit den Merkmalen des Anspruchs 1 gelöst. Bevorzugte Ausführungsformen der Erfindung sind in den davon abhängigen Ansprüchen beschrieben.

Gemäß der vorliegenden Erfindung wurde erkannt, dass sich bei elektrischen Flächentemperierungssystemen eine Verlegeflexibiltät für individuelle Raumquerschnitte dadurch erzielen lässt, dass der/die Heizleiter als flexibles Heizkabel mit einer Klettummantelung ausgebildet ist/sind. Das flexibles Heizkabel kann beliebig auf einem in dem Raum verlegten Trägerelement ohne festgelegte Verlegerichtung verlegt werden. Zur Korrektur der Verlegung kann die Klettverbindung gelöst und das flexible Heizkabel in der gewünschten veränderten Anordnung verlegt werden. Dies erlaubt so eine flexible Rohrverlegung, die sich an unterschiedliche Raumgeometrien anpassen lässt. Ein Erwärmen und Vorhalten eines Wärmeträgermediums ist nicht erforderlich.

Dementsprechend liegt die vorliegende Erfindung in der Bereitstellung eines Flächentemperierungssystems, das mindestens ein flexibles Heizelement, dessen Außenseite zumindest teilweise von einem ersten Element einer Klettverbindung ummantelt ist; und ein Trägerelement, wobei an einer Seite des Trägerelements ein zweites Element der Klettverbindung angeordnet ist, so dass das/die flexible(n) Heizelement(e) lösbar unter Bildung der Klettverbindung an dem Trägerelement festlegbar ist/sind, wobei sich das Flächentemperierungssystemen erfindungsgemäß dadurch auszeichnet, dass das/die flexible(n) Heizelement(e) als flexible(s) Heizkabel ausgebildet ist/sind.

Wie er hierin verwendet wird, bedeutet der Begriff "Heizkabel" eine Widerstandsheizleitung. In Bezug auf das Heizkabel bzw. das Heizelement wird der Begriff "flexibel" hierin so verwendet, dass das erfindungsgemäß verwendete flexible Heizkabel Biegeradien ermöglicht, die zur Verlegung eines Heizelements für ein Flächentemperierungssystem erforderlich sind.

Hinsichtlich des erfindungsgemäßen Flächentemperierungssystems kann es bevorzugt sein, wenn in dem Heizkabel eine Mehrzahl von Heizdrähten geführt sind. Dadurch kann das Beheizen eines Raums durch das erfindungsgemäße Flächentemperierungssystem beschleunigt werden.

Es kann auch von Nutzen sein, wenn in dem Heizkabel mindestens ein Heizdraht geführt ist, der in dem Heizkabel in der Längsrichtung des Heizkabels in eine Richtung geführt, an einem Ende des Heizkabels umgelenkt und in dem Heizkabel in die entgegengesetzte Richtung zurückgeführt wird. Dadurch muss das Heizkabel nur in die Verlegefläche hineingeführt und darin verlegt werden. Ein Herausführen des Heizkabels aus der Verlegefläche ist nicht erforderlich. So kann das Heizkabel mit noch größerer Variabilität verlegt werden.

Darüber hinaus kann es sich als günstig erweisen, wenn das erste Element der Klettverbindung spiralförmig oder doppelspiralförmig an der Außenseite des flexiblen Heizkabels angeordnet ist. Bei geringem Materialaufwand sorgt dies für eine dennoch hohe Häufigkeit der Kontaktstellen zwischen dem flexiblen Heizkabel und dem Trägerelement.

Es kann auch günstig sein, wenn das Trägerelement einen formstabilen, flächigen Träger umfasst, auf dessen einer Seite eine das zweites Element der Klettverbindung tragende Trägerfolie angeordnet ist. Dies soll eine ausreichend starke Klettverbindung zwischen einem flexiblen Heizkabel und dem Trägerelement gewährleisten. Dabei hat es sich als besonders günstig erwiesen, wenn der formstabilen, flächigen Träger als Polymerschaumstoff-Dämmschicht oder als Kunststoff-Hohlkammerplatte ausgebildet ist. Eine derartige Ausgestaltung des formstabilen, flächigen Trägers bietet eine ausreichend starke Klettverbindung bei günstigen und leicht erhältlichen Trägern. Hohlkammerplatten aus einem Kunststoffmaterial, wie vorzugsweise Polyethylen (PE), Polypropylen (PP) und/oder Polyvinylchlorid (PVC), weisen eine ausreichende Elastizität auf, um beim Verlegen des flexiblen Heizkabels auf der mit der Trägerfolie versehenen Kunststoff-Hohlkammerplatte bei Einwirkung eines äußeren Drucks (beispielsweise wenn der Handwerker mit einem Fuß auf die entsprechende Stelle tritt oder mit der Hand darauf drückt oder darüber streicht) auf die Hohlkammerplatte entsprechend nachzugeben. Dadurch wird die Kontaktfläche zwischen dem flexiblen Heizkabel und der Trägerfolie vergrößert, was zu einer stärker ausgebildeten Klettverbindung führt. Weiter ist eine derartige Hohlkammerplatte starr genug, um auch bei einer geringen Höhe von vorzugsweise etwa 2,0 mm bis 4,0 mm eben auf einem Untergrund auslegbar zu sein. Dies ermöglicht eine geringe Aufbauhöhe des erfindungsgemäßen Flächentemperierungssystems, das sich daher insbesondere für die Verwendung bei Altbausanierungen, bei denen häufig oberhalb des bereits vorhandenen Estrichs wenig Raum zur Verlegung einer neuen Fußbodenheizung bleibt, in besonderer Weise eignet. Derartige Kunststoff-Hohlkammerplatten zur Verwendung in dem erfindungsgemäßen Flächentemperierungssystem sind in der DE 20 2014 105 1263 U1 beschreiben, auf die hierin in Bezug auf das Material und den Aufbau einer Kunststoff-Hohlkammerplatte als formstabiler, flächiger Träger hierin explizit Bezug genommen wird. Hinsichtlich Polymerschaumstoff-Dämmschichten als formstabiler, flächiger Träger sind Polymerschaumstoff-Dämmschicht mit einer Dicke im Beriech von 1 cm bis 20 cm aus Materialien wie Polyurethanschaumstoff (PU-Schaum) oder expandiertem Polystyrol (EPS) besonders bevorzugt. Hinsichtlich der Details einer Polymerschaumstoff-Dämmschicht als formstabiler, flächiger Träger wird auf die EP 2 995 870 A1 verwiesen, auf die diesbezüglich explizit Bezug genommen wird.

Es kann auch von Vorteil sein, wenn das Trägerelement als eine Trägerfolie ausgebildet ist, bei der zumindest auf einer Seite das zweite Element der Klettverbindung angeordnet ist. In einer derartigen Ausführungsform ist die Trägerfolie selbst das formstabile, flächige Element, so dass ein besonders einfaches erfindungsgemäßes Flächentemperierungssystem mit sehr geringer Aufbauhöhe resultiert. Dies macht es für eine Verlegung des erfindungsgemäßen Flächentemperierungssystems als Fußbodenheizung für die Gebäudesanierung besonders geeignet.

Ebenso kann es von Nutzen sein, wenn das Trägerelement faltbar und/oder zusammenrollbar ausgebildet ist. Dies ermöglicht einen einfachen Transport des Trägers des erfindungsgemäßen Flächentemperierungssystems an den Einsatzort.

Darüber hinaus kann es von Nutzen sein, wenn der formstabile, flächige Träger bzw. das formstabile, flächige Element an seiner dem zweiten Element der Klettverbnidung abgewandten Seite mit einer Abdeckfolie verbunden ist, die bevorzugt wasserabweisend ausgeführt sein kann. Dadurch kann effektiv verhindert werden, dass Leckagewasser oder Feuchtigkeit in den Boden des Raums gelangt. Die Abdeckfolie ist an dem formstabilen flächigen Träger vorzugsweise mittels eines Klebstoffes oder in anderer Weise verbunden bevorzugt unlösbar befestigt. Hierzu ist es bevorzugt, wenn die Abdeckfolie als Verbundfolie ausgebildet ist, deren dem formstabilen, flächigen Trägern zugewandte Seite als Metallschicht, vorzugsweise als Aluminiumschicht ausgebildet ist. Durch einen derartigen Aufbau lassen sich die isolierenden Eigenschaften des formstabilen, flächigen Trägers weiter erhöhen. Dabei ist es besonders hilfreich, wenn die Abdeckfolie neben der Metallschicht eine Trägerschicht, vorzugsweise aus Papier, und eine Schutzschicht, vorzugsweise aus Polymermaterial, insbesondere Polyethylen, umfasst.

Ebenso kann es hilfreich sein, wenn die Trägerfolie als Verbundfolie ausgebildet ist, deren dem formstabilen, flächigen Trägern zugewandte Seite als Metallschicht, vorzugsweise als Aluminiumschicht ausgebildet ist. Dabei ist es besonders bevorzugt, dass die Trägerfolie neben der Metallschicht eine Trägerschicht, vorzugsweise aus Papier, und eine Schutzschicht, vorzugsweise aus Polymermaterial, insbesondere Polyethylen, umfasst.

Die Trägerfolie ist bevorzugt flächig mit dem zweiten Element der Klettverbindung versehen, vorzugsweise ist die gesamte Fläche der Trägerfolie mit dem zweiten Element der Klettverbindung versehen. Die so gebildete flächige Klettverbindung ermöglicht eine Heizkabelverlegung auf der gesamten Fläche der Trägerfolie in einem nahezu beliebigen Verlegemuster.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem flexiblen Heizkabel, wodurch das flexible Heizkabel auf der Trägerfolie reversibel festgelegt wird. Dabei ist es bevorzugt, wenn das erste Element der Klettverbindung die Haken, Schlingen und/oder Fasern aufweist, während das zweite Element der Klettverbindung durch das Gewirke, das Vlies, das Veloursgewebe oder ein Plüsch-, Frottee- oder sonstiges textiles Flächengebilde gebildet wird. Umgekehrt ist auch möglich, dass das erste Element der Klettverbindung durch das Gewirke, das Vlies, das Veloursgewebe, das Plüsch-, Frottee- oder sonstiges textiles Flächengebilde gebildet wird, während das zweite Element der Klettverbindung die Haken, Schlingen und/oder Fasern aufweist.

Gemäß der vorliegenden Erfindung ist der formstabile flächige Träger oder das formstabile, flächige Element vorzugsweise so stabil ausgeführt, dass er für die Verlegung des flexiblen Heizkabels als Bestandteil einer Fußbodenheizung geeignet ist.

Hinsichtlich des flexiblen Heizkabels des erfindungsgemäßen Flächentemperierungssystems ist es überdies bevorzugt, dass das flexible Heizkabel zwischen dem ersten Element der Klettverbindung einer Ummantelung des Heizkabels eine flexible, elastische Ummantelung umfasst. Beim Verlegen des flexiblen Heizkabels auf dem Trägerelement passt sich die flexible, elastische Ummantelung aufgrund ihrer Elastitzität an die Oberfläche des Trägerelements an, wenn auf das flexible Heizkabel von außen Druck ausgeübt wird, beispielsweise indem der Verleger mit dem Fuß auf das flexible Heizkabel steigt oder mit der Hand darauf drückt oder darüber streicht. Dadurch wird die Kontaktfläche zwischen dem flexiblen Heizkabel und dem Trägerelemente vergrößert, was zu einer stärker ausgebildeten Klettverbindung führt. Nach Wegfall des Drucks auf das flexible Heizkabel bleibt diese Kontaktfläche aufgrund der Klettverbindung im Wesentlichen unverändert. Darüber hinaus kann das flexible Kunststoffrohr beliebig auf dem mit der Trägerfolie versehenen formstabilen flächigen Träger ohne festgelegte Verlegerichtung verlegt werden. Ein Aufschwimmen des flexiblen Heizkabels in einem frisch verlegten Estrich ist weitestgehend ausgeschlossen.

Das erfindungsgemäße Flächentemperierungssystem sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine Ansicht auf ein Heizkabel zur Verwendung in einem Flächentemperierungssystem gemäß einer Ausführungsform der vorliegenden Erfindung;
Fig. 2 eine perspektivische Ansicht auf einen Abschnitt eines Flächentemperierungssystems gemäß einer Ausführungsform der vorliegenden Erfindung; und
Fig. 3 eine Ansicht eines Verlegemusters für ein Flächentemperierungssystem gemäß einer Ausführungsform der vorliegenden Erfindung.

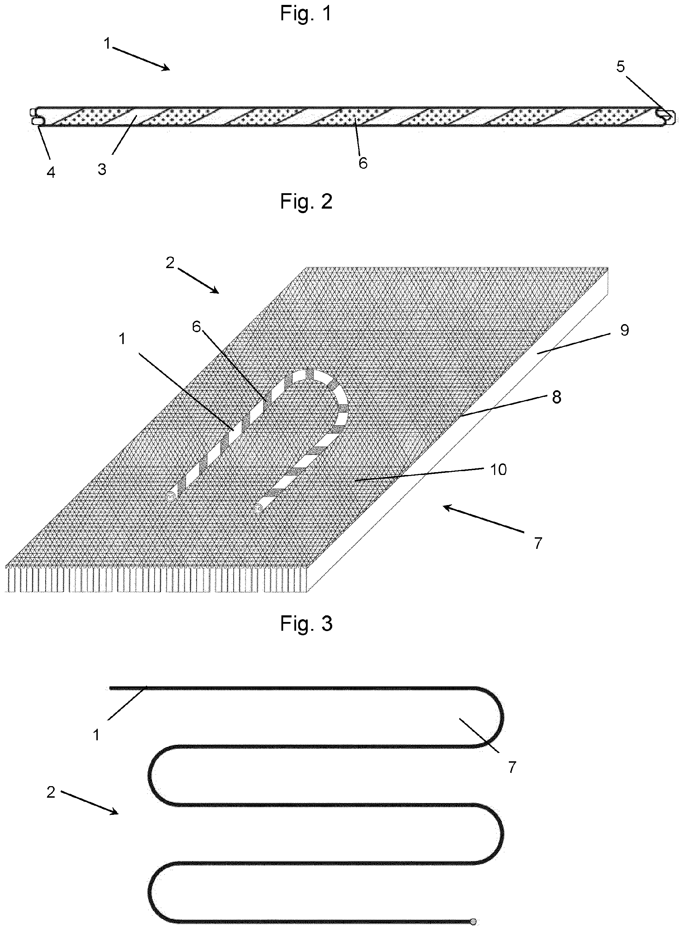

In Fig. 1 zeigt einen Abschnitt eines flexiblen Heizkabels 1 zur Verwendung in einem Flächentemperierungssystem 2 gemäß einer Ausführungsform der vorliegenden Erfindung.

Das flexible Heizkabel 1 umfasst eine Ummantelung 3 aus einem polymeren Material, in dem ein Heizdraht 4, insbesondere eine Widerstandsheizleitung beispielsweise aus Kupfer, geführt ist. Der Heizdraht 4 ist in dem Heizkabel 1 in dessen Längsrichtung geführt, ist an einem Ende 5 des Heizkabels 1 umgelenkt und ist in dem Heizkabel 1 in die entgegengesetzte Richtung zurückgeführt. Die Außenseite des flexiblen Heizkabels 1 ist in Form einer Spirale von einem ersten Element 6 einer Klettverbindung gebildet. In der in Fig.1 dargestellten Ausführungsform ist die Ummantelung 3 aus Polyethylen (PE) gebildet. Die Außenseite des flexiblen Heizkabels 1 bildet das erste Element 6 der Klettverbindung, das als Band ausgebildet ist, das in Form einer Spirale um die Ummantelung 3 angeordnet ist. Das erste Element 6 der Klettverbindung umfasst Haken, Fasern oder ähnliches.

In Fig. 2 ist ein Abschnitt einer Ausführungsform eines Flächentemperierungssystems 2 gemäß der vorliegenden Erfindung in einer perspektivischen Ansicht gezeigt. Das erfindungsgemäße Flächentemperierungssystem 2 umfasst ein flexibles Heizkabel 1 und ein Trägerelement 7, das selbst eine Trägerfolie 8 sowie einen formstabilen, flächigen Träger 9 umfasst. Wie Fig. 2 zeigt, ist das flexible Heizkabel 1 in dem erfindungsgemäßen Flächentemperierungssystem 2 auf die Trägerfolie 8 aufgebracht, die wiederum flächig auf den formstabilen flächigen Träger 9 aufgebracht ist. An ihrer dem flexiblen Heizkabel 1 zugewandten Seite umfasst die Trägerfolie 8 ein zweites Element 10 der Klettverbindung, das als Gewirke ausgebildet ist, alternativ auch als Vlies, Veloursgewebe, Plüsch-, Frottee- oder sonstiges textiles Flächengebilde ausgebildet sein kann. Das flexible Heizkabel 1, an dessen Außenseite sich das erste Element 6 der Klettverbindung befindet, ist über das zweite Element 10 lösbar unter Bildung der Klettverbindung an dem Trägerelement 7 festgelegt.

An der dem flexiblen Heizkabel 1 abgewandten Seite der Trägerfolie 8 ist der formstabilen, flächigen Träger 9 angeordnet. Bei dem formstabilen, flächigen Träger 9 handelt es sich in dieser Ausführungsform der vorliegenden Erfindung um eine Hohlkammerplatte aus einem Kunststoffmaterial, die in der in Fig. 2 dargestellten Ausführungsform aus Polyethylen (PE), insbesondere Polyethylen hoher Dichte (HDPE) hergestellt ist. Alternativ können auch Polypropylen (PP), insbesondere statistisches Polypropylen (PP-R), oder Polyvinylchlorid (PVC), insbesondere Hart-PVC (PVC-U) zum Einsatz kommen. Die Hohlkammerplatte des erfindungsgemäßen Flächentemperierungssystems 2 ist vorzugsweise faltbar und/oder aufrollbar ausgebildet. Hierzu können die Stege einiger Hohlkammern der Hohlkammerplatte an der der Trägerfolie 8 gegenüberliegenden Seite der Hohlkammerplatte nicht vorhanden oder durchtrennt sein, wobei sich eine Durchtrennung vorzugsweise über die gesamte Breite der Hohlkammerplatte 4 erstreckt. In alternativen Ausführungsformen können auch andere formstabile, flächige Träger 9, beispielsweise Polymerschaumstoff-Dämmschicht mit einer Dicke im Beriech von 1 cm bis 20 cm aus Materialien wie Polyurethanschaumstoff oder expandiertem Polystyrol, eingesetzt werden.

Auf die der Trägerfolie 8 abgewandten Seite des formstabilen, flächigen Trägers 9 kann eine Abdeckfolie aufgebracht sein, die bevorzugt aus einer vorzugsweise als einer Aluminiumfolie ausgebildeten Metallschicht, einem Papierträger und einer vorzugsweise als Polyethylenfolie ausgebildeten Schutzschicht aufgebaut ist, durch den die Abdeckfolie wasserabweisend ausgeführt ist. Dadurch kann effektiv verhindert werden, dass Leckagewasser oder Feuchtigkeit in den Boden des Raums gelangt.

Zum Verlegen eines als Fußbodenheizung ausgebildeten erfindungsgemäßen Flächentemperierungselements 2 wird der mit der Trägerfolie 8 und ggf. der Abdeckfolie versehene formstabile, flächige Träger 9 zunächst auf dem Boden vollflächig ggf. nach vorherigem Zuschneiden ausgelegt. Daraufhin wird das flexible Heizkabel 1 in einem gewünschten Verlegemuster aufgelegt, beispielsweise schlangenförmig wie in Fig. 3 gezeigt, auf die Trägerfolie 8 gelegt und angedrückt, so dass eine Klettverbindung ausgebildet wird. Zur Korrektur des Verlegemusters kann die reversibel ausgebildete Klettverbindung durch Anheben des flexiblen Heizkabel 1 vom Trägerelement 7 gelöst werden, wonach dieses erneut verlegt werden kann. Abschließend wird die Anordnung mit Estrich vergossen. Das flexible Heizkabel 1 in dem erfindungsgemäßen Flächentemperierungssystem 2 erlaubt Verlegeflexibiltät für individuelle Raumquerschnitte, weil das flexible Heizkabel beliebig auf einem in dem Raum verlegten Trägerelement verlegt werden kann. Dies erlaubt eine flexible Rohrverlegung, die sich an unterschiedliche Raumgeometrien anpassen lässt. Ein Erwärmen und Vorhalten eines Wärmeträgermediums ist nicht erforderlich.

Die vorliegende Erfindung wurde exemplarisch unter Bezugnahme auf das in den Figuren dargestellte Ausführungsbeispiel der vorliegenden Erfindung im Detail erläutert. Es versteht sich jedoch, dass die vorliegende Erfindung nicht auf dieses Ausführungsbeispiel beschränkt ist, sondern dass sich der Umfang der vorliegenden Erfindung aus den Ansprüchen ergibt.

## Patentansprüche

1. Flächentemperierungssystem (2), umfassend:
- mindestens ein flexibles Heizelement (1), dessen Außenseite zumindest teilweise von einem ersten Element (6) einer Klettverbindung ummantelt ist; und
- ein Trägerelement (7), wobei an einer Seite des Trägerelements (7) ein zweites Element (10) der Klettverbindung angeordnet ist, so dass das/die flexible(n) Heizelement(e) (1) lösbar unter Bildung der Klettverbindung an dem Trägerelement (7) festlegbar sind;
**dadurch gekennzeichnet, dass**
das/die flexible(n) Heizelement(e) als flexible(s) Heizkabel (1) ausgebildet ist/sind.

2. Flächentemperierungssystem (2) nach Anspruch 1, **dadurch gekennzeichnet, dass** in dem Heizkabel (1) eine Mehrzahl von Heizdrähten (4) geführt sind.

3. Flächentemperierungssystem (2) nach Anspruch 1 oder Anspruch 2, **dadurch gekennzeichnet, dass** in dem Heizkabel (1) mindestens ein Heizdraht (4) geführt ist, der in dem Heizkabel (1) in der Längsrichtung des Heizkabels (1) in eine Richtung geführt, an einem Ende des Heizkabels (1) umgelenkt und in dem Heizkabel (1) in die entgegengesetzte Richtung zurückgeführt ist.

4. Flächentemperierungssystem (2) nach einem Ansprüche 1 bis 3, **dadurch gekennzeichnet, dass** das erste Element (6) der Klettverbindung spiralförmig oder doppelspiralförmig an der Außenseite des flexiblen Heizkabels (1) angeordnet ist.

5. Flächentemperierungssystem (2) nach einem der vorhergehenden Ansprüche, **dadurch gekennzeichnet, dass** das Trägerelement (7) als ein formstabiler, flächiger Träger (9) ausgebildet ist, auf dessen einer Seite eine das zweites Element (10) der Klettverbindung tragende Trägerfolie (8) angeordnet ist.

6. Flächentemperierungssystem (1) nach Anspruch 5, **dadurch gekennzeichnet, dass** der formstabilen, flächigen Träger (9) als Polymerschaumstoff-Dämmschicht oder als Kunststoff-Hohlkammerplatte ausgebildet ist.

7. Flächentemperierungssystem (2) nach einem Ansprüche 1 bis 4, **dadurch gekennzeichnet, dass** das Trägerelement (7) als eine Trägerfolie ausgebildet ist, bei der zumindest auf einer Seite das zweite Element (10) der Klettverbindung angeordnet ist.

8. Flächentemperierungssystem (1) nach einem der vorhergehenden Ansprüche, **dadurch gekennzeichnet, dass** das Trägerelement (7) faltbar und/oder aufrollbar ausgebildet ist.
